# EUROPÄISCHE PATENTANMELDUNG

(11) **EP 0 677 726 A2**
(43) Veröffentlichungstag der Anmeldung: **18.10.1995**
(21) Anmeldenummer: 95104878.4
(22) Anmeldetag: 01.04.1995
(51) Int. Cl.: G01L 9/06, G01L 19/06, G01L 9/00, G01L 7/08

(54) **Drucksensor**

(30) Priorität: 16.04.1994 DE 4413274
(71) Anmelder: Alcatel SEL Aktiengesellschaft, D-70435 Stuttgart (DE); ALCATEL N.V., NL-2288 BH Rijswijk (NL)
(72) Erfinder: Güldenpfennig, Uwe, D-90768 Fürth (DE); Giebel, Waldemar, D-90425 Nürnberg (DE); Krug, Klaus, D-91325 Adelsdorf (DE)
(74) Vertreter: Pohl, Herbert, Dipl.-Ing

(57) **Zusammenfassung**

Die Erfindung betrifft einen Drucksensor, bei dem die Membran zwischen dem zu messenden Medium und dem im Sensorinnenraum zur Druckübertragung auf das Meßelement dienenden Medium aus einem Elastomermaterial besteht.

Um mit einem derartigen Drucksensor auch Überdrücke gasförmiger Medien, Unterdrücke und Drücke bei Temperaturen von über 100°C messen zu können, ist die Membran mit einer Diffusionssperrschicht versehen, die ein Eindringen von Gas oder Wasserdampf in den Innenraum des Drucksensors verhindert. Weiterhin kann das zur Druckübertragung dienende Medium im Innenraum des Sensors aus einem Stoff bestehen, der nicht in der Lage ist, die Gasmoleküle des zu messenden Druckmediums und der Umgebungsluft aufzunehmen.

## Beschreibung

Die Erfindung betrifft einen Drucksensor zum Messen des Druckes von flüssigen oder gasförmigen Medien, welcher eine mit einer Flüssigkeit gefüllte Meßzelle aufweist, die aus einem, ein Sensorelement enthaltenden mit einer Membran verschlossenen Gehäuse besteht.

Ein solcher Drucksensor ist bekannt (DE-A-37 03 685). Bei dem bekannten Drucksensor besteht die Membran in der Regel aus einem elastomeren Kunststoff und die Flüssigkeit, welche der Druckübertragung zwischen der Membran und dem Sensorelement dient, ist ein Silikonöl, welches in gut entgastem und nahezu wasserfreien Zustand in die Meßzelle eingefüllt wird.

Ein Nachteil des bekannten Drucksensors besteht in der Gasdurchlässigkeit der Trennmembran. Diese Gasdurchlässigkeit nimmt bei steigender Temperatur zu.

Wegen der Gasdurchlässigkeit der Membrane kann ein Gasaustausch mit der Umgebung stattfinden, der dazu führen kann, daß soviel Gas aus der Umgebung in den Drucksensor eindringt und im Silikonöl in Lösung geht, bis der Dampfdruck der im Silikonöl gelösten Gase dem Außendruck der Gase vor der Membrane entspricht. Dabei gilt, daß die im Silikonöl lösbare Gasmenge annähernd proportional zum Außendruck und die gelöste Gasmenge annähernd proportional zum Dampfdruck des Gases im Silikonöl ist.

Wird nun bei einem solchermaßen mit Gas gesättigten Drucksensor der Außendruck soweit erniedrigt, daß der Außendruck kleiner als der Dampfdruck des im Silikonöl gelösten Gases ist - es genügt typischerweise eine Halbierung des anliegenden Absolutdruckes -, dann wird aus dem Silikonöl teilweise das gelöste Gas austreten, den Innenraum des Drucksensors anfüllen und durch die Membranspannung einen Innendruck des Drucksensors bewirken, der zum Meßdruck hinzukommt. Solch eine Situation tritt auf, wenn ein Drucksensor zu Unterdruckmessungen eingesetzt wird, oder wenn ein Drucksensor bei Messungen höherer Drücke längere Zeit mit höherem Druck belastet und dann mindestens teilweise entlastet wird. In diesen Meßsituationen wird dann typischerweise durch das Gas, das aus dem Silikonöl austritt und den Innenraum des Drucksensors ausfüllt, ein undefiniert erhöhtes und zeitlich instabiles Drucksignal durch den Drucksensor gemessen werden, welches eine sinnvolle Verwendung des bekannten Drucksensors mit Elastomermembran bei diesen Messungen unmöglich macht.

Zusätzlich zu dem Gas aus dem Meßmedium kann natürlich auch Wasserdampf aus dem Meßmedium, beispielsweise feuchte Luft, durch die Membran in den Drucksensor eindringen. Bei Temperaturen über 100°C beträgt der Dampfdruck des eingedrungenen Wassers mehr als Atmosphärendruck und führt ebenfalls zu der bereits erwähnten Innendruckerhöhung des Sensors.

Das der Erfindung zugrunde liegende technische Problem besteht darin, den bekannten Drucksensor in der Weise zu verbessern, daß er für die Messung von Überdrücken in gasförmigen Medien, von Drücken, welche kleiner als der Atmosphärendruck sind, und für Messungen bei Temperaturen von über 100°C geeignet ist.

Eine Lösung des technischen Problems besteht darin, daß die Membran mit einer Diffusionssperrschicht versehen ist. Eine andere Lösung besteht darin, daß ein Druckübertragungsmedium verwendet wird, welches keine oder nur eine sehr geringe Menge an Gasmolekülen aufnehmen kann.

Eine weitere Lösung besteht darin, daß die Membran mit einer Diffusionssperrschicht versehen ist und ein Druckübertragungsmedium verwendet wird, welches keine oder nur eine sehr geringe Menge an Gasmolekülen aufnehmen kann.

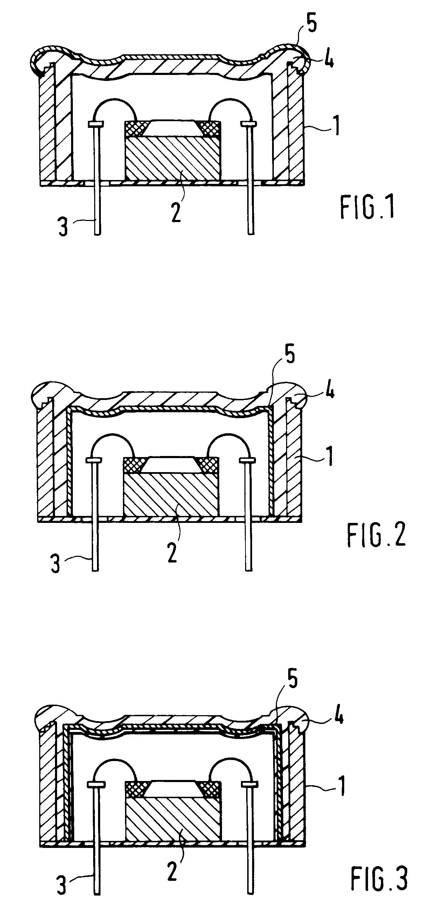

In jedem Fall wird durch diese Maßnahmen verhindert, daß Gas oder Wasserdampf in den Drucksensor eindringen und die in der Einleitung geschilderten nachteiligen Auswirkungen verursachen kann. Vorteilhafte Einzelheiten der Erfindung sind in den Ansprüchen 4 bis 9 enthalten, welche nachstehend anhand der in den Figuren 1 bis 3 gezeigten Ausführungsbeispiele erläutert ist. Es zeigen:
- Fig. 1: den Längsschnitt durch ein Ausführungsbeispiel des erfindungsgemäßen Drucksensors,
- Fig. 2: den Längsschnitt durch ein anderes Ausführungsbeispiel des erfindungsgemäßen Drucksensors und
- Fig. 3: den Längsschnitt durch ein weiteres Ausführungsbeispiel des erfindungsgemäßen Drucksensors.

Wie aus Fig. 1 zu erkennen ist, besitzt der Drucksensor ein Gehäuse 1, auf dessen Boden im Inneren das Sensorelement 2 angeordnet ist, dessen elektrische Anschlüsse über die Kontaktstifte 3 nach außen geführt sind. Das obere offene Ende des Gehäuses 1 ist mit der elastischen Membran 4 verschlossen, auf welcher die Diffusionssperrschicht 5 angeordnet ist. Bei dem aus Fig. 1 ersichtlichen Ausführungsbeispiel des Drucksensors besteht die Diffusionssperrschicht aus einer Metallfolie, beispielsweise aus Aluminium oder Stahl, mit einer Dicke von 1 bis 50 µm. Sie ist beispielsweise auf der Membran des bereits fertigen Drucksensors durch Kleben befestigt. Es hat sich bei diesem Ausführungsbeispiel als zweckmäßig erwiesen, wenn die Metallfolie zusammen mit der Membran im gleichen Werkzeug geprägt wird. Die Diffusionssperrschicht 5 kann aber auch aus einer Kunststoffolie mit den entsprechenden Eigenschaften bestehen.

Bei dem in Fig. 2 gezeigten Ausführungsbeispiel besteht die Diffusionssperrschicht 5 aus einem geprägten, becherförmigen Formteil aus Aluminium oder Stahl mit einer Wandstärke von 1 bis 50 µm, welches vor der Montage des Drucksensors beispielsweise durch Vulkanisieren auf die Innenseite der Membran 4 aufgebracht worden ist.

Bei den Ausführungsbeispielen gemäß Fig. 1 und 2 können die metallischen Diffusionssperrschichten auch durch physikalische und/oder chemische Metallabscheidung z.B. durch Bedampfen, hergestellt worden sein.

Die in Fig. 3 gezeigte Ausführungsform des Drucksensors unterscheidet sich von den Ausführungsformen gemäß Fig. 1 und Fig. 2 dadurch, daß die becherförmige Diffusionssperrschicht 5 in die Membran 4 einvulkanisiert ist.

Das in dem Innenraum 6 des Gehäuses 1 vorhandene Druckübertragungsmedium kann die Eigenschaft aufweisen, daß es keine oder nur eine geringe Menge an Gasmolekülen aufnehmen kann.

## Patentansprüche

1. Drucksensor zum Messen des Druckes von flüssigen oder gasförmigen Medien, welcher eine mit einer Flüssigkeit gefüllte Meßzelle aufweist, die aus einem, ein Sensorelement enthaltenden mit einer Membran verschlossenen Gehäuse besteht,
**dadurch gekennzeichnet**, daß die Membran (4) mit einer Diffusionssperrschicht (5) versehen ist.

2. Drucksensor zum Messen des Druckes von flüssigen oder gasförmigen Medien, welcher eine mit einer Flüssigkeit gefüllte Meßzelle aufweist, die aus einem, ein Sensorelement enthaltenden, mit einer Membran verschlossenen Gehäuse besteht,
dadurch gekennzeichnet, daß ein Druckübertragungsmedium verwendet wird, welches keine oder nur eine sehr geringe Menge an Gasmolekülen aufnehmen kann.

3. Drucksensor zum Messen des Druckes von flüssigen oder gasförmigen Medien, welcher eine mit einer Flüssigkeit gefüllte Meßzelle aufweist, die aus einem, ein Sensorelement enthaltenden, mit einer Membran verschlossenen Gehäuse besteht,
dadurch gekennzeichnet, daß die Membran (4) mit einer Diffusionssperrschicht (5) versehen ist und ein Druckübertragungsmedium verwendet wird, welches keine oder nur eine sehr geringe Menge an Gasmolekülen aufnehmen kann.

4. Drucksensor nach den Ansprüche 1 und 3,
dadurch gekennzeichnet, daß die Diffusionssperrschicht (5) aus einer Metallschicht besteht.

5. Drucksensor nach den Ansprüchen 1 und 3,
dadurch gekennzeichnet, daß die Diffusionssperrschicht (5) aus einer Kunststoffschicht besteht.

6. Drucksensor nach den Ansprüche 1 und 3 bis 5,
dadurch gekennzeichnet, daß die Diffusionssperrschicht (5) auf der inneren und/oder äußeren Membranoberfläche (4) angeordnet ist.

7. Drucksensor nach den Ansprüche 1 und 3 bis 5,
dadurch gekennzeichnet, daß die Diffusionssperrschicht (5) in die Membran (4) einvulkanisiert ist.

8. Drucksensor nach den Ansprüchen 1 und 3 bis 5,
dadurch gekennzeichnet, daß die Diffusionssperrschicht (5) mittels physikalischer und/oder chemischer Metallabscheidung auf der Membran (4) erzeugt ist.
